# EUROPEAN PATENT APPLICATION

(11) **EP 1 035 510 A2**
(43) Date of publication of application: **13.09.2000**
(21) Application number: 00103408.1
(22) Date of filing: 24.02.2000
(51) Int. Cl.: G06T 7/20

(54) **Control method and apparatus of monitoring television camera according to photographing conditions of object, and image monitoring and recording apparatus**

(30) Priority: 25.02.1999 JP 4777499
(71) Applicant: HITACHI DENSHI KABUSHIKI KAISHA, Chiyoda-ku, Tokyo 101-0024 (JP)
(72) Inventor: Sumiyoshi, Masanori, Hitachi Denshi K.K., Kodaira-shi, Tokyo 187-8511 (JP); Ueda, Hirotada, Hitachi Denshi K.K., Kodaira-shi, Tokyo 187-8511 (JP); Nehishi, Masami, Hitachi Denshi K.K., Kodaira-shi, Tokyo 187-8511 (JP)
(74) Representative: Altenburg, Udo, Dipl.-Phys.

(57) **Abstract**

In a control method of a television camera (1) in a monitoring and recording apparatus (3) for photographing a monitor area by means of the television camera and monitoring an entering object into the monitor area, an entering object in each input image of the monitor area photographed successively by means of the television camera (1) is detected and a moving speed of the detected entering object in the input image is detected, so that a shutter speed of the television camera is controlled in accordance with the detected moving speed of the entering object.

## Description

### BACKGROUND OF THE INVENTION

The present invention relates to a control method and apparatus of a monitoring television camera and an image monitoring and recording apparatus for monitoring entry of an object such as a person or the like, and more particularly to such a control method and apparatus for a surveillance system including a monitoring television camera and an image monitoring and recording apparatus in which a photograph of an entering object is taken in accordance with photographing conditions thereof.

In a conventional apparatus for monitoring an entering person or intruder, that is, entry of an object such as a person or the like, generally, image data of the object photographed by a monitoring television camera is recorded in a recording apparatus such as a VTR or a hard disc. Thereafter, an operator detects a necessary image data, that is, an intruder from the recorded image data and displays it in a display. Among methods of detecting such an intruder from the image data, for example, there is a method in which an image of the intruder is detected from a difference between a background image in which the image of the intruder is not included and an input image in which the image of the intruder is included, and an edge image of the detected image of the intruder is detected to thereby detect the intruder. Such a detection method is disclosed, for example, in U.S. Patent Serial No. 08/646018 filed May 7, 1996 and European Patent Application No. 96303303.0 corresponding to JP-A-09-073541. Further, the method of detecting an edge image of an object from a photographed image is described in "Introduction to Computer Image Processing" edited by Japan Industrial Technical Center, published from Soken, issued March, 10, 1985, pp. 118-125.

Such a monitoring apparatus is installed in any place such as the inside of a bank, a convenience store and the like, a private area in a construction site, a dam, a base, an airport and the like. In such a place, an entering object or intruder moves in various ways within the photographed image. Further, photographing conditions of the entering object or intruder are varied in various ways.

### SUMMARY OF THE INVENTION

There is the possibility that an entering object cannot be detected exactly depending on a state of an input image when photographing conditions of the monitoring television camera are fixed. For example, if a shutter speed (electronic shutter speed) of the monitoring television camera is fixed, an image of an entering object in a recorded image is blurred so that the image of the entering object cannot be detected exactly when movement of the entering object in the input image is fast. Further, when a diaphragm of the monitoring television camera is fixed, a photographed image of the entering object may be too light and white or too dark depending on brightness of the background of the input image so that the image of the entering object cannot be detected exactly.

Accordingly, it is an aim of the present invention to solve the above problem in the prior art and to provide a control method and apparatus of a monitoring television camera and an image monitoring and recording apparatus which can take an exact photograph of an entering object according to photographing conditions of the entering object.

In order to achieve the above aim, according to an aspect of the present invention, the control method of a television camera for monitoring an entering object into a monitor area, comprises:
(a) a step of detecting an entering object in input images of the monitor area picked up successively by the television camera;
(b) a step of detecting a moving speed in the input image of the detected entering object; and
(c) a step of controlling a shutter speed of the television camera in accordance with the detected moving speed of the entering object.

More particularly, in an example of the present invention, an image of the entering object is detected from an image photographed by the television camera by means of image recognition and a moving speed of the entering object in an input image is detected on the basis of a movement distance of the detected image of the entering object in the input image in a unit time, so that the shutter speed of the television camera is controlled to an exact value in accordance with the detected moving speed of the entering object.

Consequently, even if movement of the entering object within the input image is fast, the image of the entering object can be detected exactly without blurring of the image of the entering object in the recorded image.

Further, in another example of the present invention, an image of the entering object is detected from an image photographed by the television camera by means of the image recognition and brightness of an image around the detected entering object or brightness of an image of the entering object itself is detected, so that the diaphragm of the television camera is controlled in accordance with the detected brightness.

Consequently, it is prevented that the photographed image of the entering object is too light and white or too dark according to the brightness of the background of the input image, and the image of the entering object can be detected exactly.

### BRIEF DESCRIPTION OF THE DRAWINGS

Fig. 1 is a block diagram schematically illustrating an image monitoring and recording apparatus according to an embodiment of the present invention;
Figs. 2A to 2E are diagrams for explaining a method of obtaining a movement amount of an entering object on a picture in the present invention;
Fig. 3 is a diagram for explaining control in case where two entering objects having different moving speeds are present in a monitor area in the present invention;
Fig. 4 is a diagram illustrating an example of an operation panel of Fig. 1;
Fig. 5 is a flow chart showing an example of a method of controlling a shutter speed and a diaphragm value of a television camera in the present invention;
Figs. 6a to 6F illustrate input images for explaining processing operation of the flow chart of Fig. 5;
Fig. 7 shows an example of a table showing a relation between a moving speed of the entering object on a picture and an optimum value of a shutter speed; and
Fig. 8 is a flow chart showing a modification of the flow chart of Fig. 5.

### DESCRIPTION OF THE EMBODIMENTS

An embodiment of the control method and apparatus of a monitoring television camera and an image monitoring and recording apparatus according to the present invention is now described in detail with reference to the accompanying drawings.

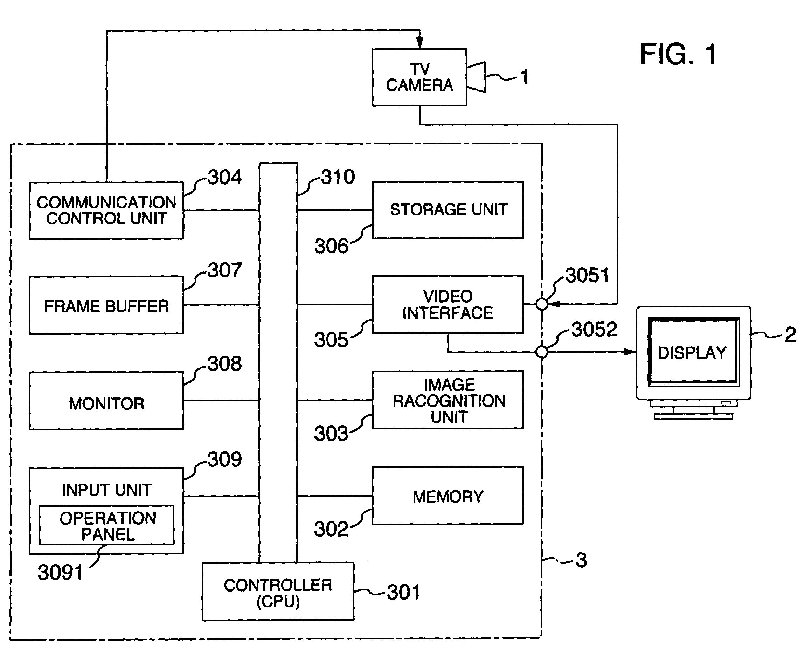

Fig. 1 is a block diagram schematically illustrating an embodiment of the image monitoring and recording apparatus according to the present invention. In Fig. 1, numeral 1 denotes a monitoring television camera for taking a photograph of a monitor area. The monitoring television camera 1 is controlled by a monitoring television controlling and recording apparatus 3 and may be installed in any place to be monitored such as a store and a private area. Numeral 2 denotes a monitoring display unit, which displays an image from the monitoring television camera 1 and displays an image reproduced after the photographed image by the television camera 1 has been recorded. The monitoring television controlling and recording apparatus 3 comprises the following constituent elements 301 to 3091 and a bus for connecting these constituent elements to one another. Numeral 301 denotes a controller including a CPU (Central Processing Unit) and for controlling the whole monitoring television controlling and recording apparatus 3 in accordance with software programs stored in a memory 302. The memory 302 is constituted by ROMs (Read Only Memories), RAMs (Random Access Memories) and the like and the above programs are stored in the memory 302 while image data are stored therein temporarily. Numeral 303 denotes an image recognition unit constituted by software, for example, 304 a communication control unit for controlling communication between the monitoring television controlling and recording apparatus 3 and the television camera 1, 305 a video interface, 306 a storage unit, 307 a frame buffer memory, 308 a monitor (display unit), 309 an input unit, and 310 a bus for connecting the above constituent elements in the monitoring television controlling and recording apparatus 3 to the controller 301.

The above constituent elements are now described.

The video interface 305 includes an input interface and an output interface (not shown) for video signals. The interfaces are connected to the display unit 2 through an output terminal 3052 and to the monitoring television camera 1 through an input terminal 3051. The video interface 305 converts a moving image sent from the television camera 1 into a format (e.g. MPEG, Motion-JPEG, etc.) handled by the monitoring television controlling and recording apparatus 3 and the converted image is supplied to the controller 301 and the image recognition unit 303 and also to the storage unit 306 to be stored therein.

Further, the video interface 305 supplies signal information such as image information stored in the storage unit 306 or image information from the television camera 1 to the display unit 2 so that the information is displayed on the display unit 2. The image recognition unit 303 determines whether or not an entering object is present on the basis of an moving image sent from the television camera 1 and, when an entering object is detected, detects brightness of the entering object itself or brightness of its neighborhood and detects a moving speed of the entering object from the images of the detected entering object. The controller 301 obtains optimum values of photographing conditions of the monitoring television camera 1, that is, the shutter speed of an electronic shutter and the diaphragm value on the basis of the detected brightness and moving speed to prepare control signals for the optimum values and supplies the control signals to the television camera 1 through the communication control unit 304 to thereby control the shutter speed of the electronic shutter and the diaphragm value to the optimum values.

Operation of the image recognition unit 303 will be described in detail later.

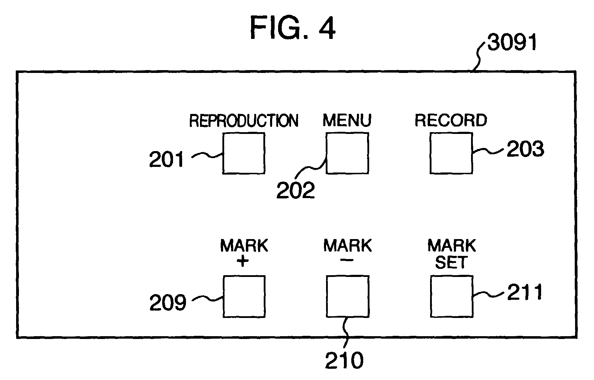

The input unit 309 includes input means, for example, an operation panel 309 for inputting various control information and the operation panel 3091 includes switches, for example, button switches for various recording modes, reproduction control and the like. More particularly, the operation panel 3091 includes, for example as shown in Fig. 4, a reproduction button 201 for instructing the apparatus to reproduce the image signal recorded in the storage unit 306, a menu button 202 used to select and instract various menus, a record button 203 for instructing the apparatus to record an image signal from the television camera 1 into the storage unit 306, a mark set button 211 for recording a mark such as a book mark or index in record data so that the mark is superposed on an image signal from the television camera 1, a mark + button 209 for instructing the apparatus to automatically search for the mark nearest to a current position in the reproduced image in the forward direction when the mark + button 209 is depressed during reproductio, and a mark - button 210 for instructing the apparatus to automatically search for the mark nearest to a current position in the reproduced image in the backward direction when the mark - button 210 is depressed during reproduction. Recording operation is stopped by, for example, depressing the record button 203 again. Further, reproduction is stopped by, for example, depressing the reproduction button 201 again.

An operation input from the operation panel 3091 is supplied to the controller 301 and the controller 301 supplies the operation input as a control signal to the corresponding constituent element so that control operation corresponding to the operation input is performed.

Image data obtained by taking a photograph of an entering object and the date and time that the entering object is photographed are stored in the storage unit 306. The storage unit 306 may be, for example, a HDD (Hard Disc Drive) recording unit, a DVD (Digital Video Disc) recording unit, a time lapse VTR (Video Tape Recorder) or the like. Alternatively, the storage unit 306 may be a remote file connected to the monitoring television controlling and recording apparatus 3 through a network. Further, the storage unit 306 may be a combination of a plurality of the above-mentioned storage units. The image data stored in the storage unit 306 are compressed upon storage and are expanded upon reproduction (output). However, the compression of the image data is not an essential condition in the present invention and when a memory capacity of the storage unit is sufficiently large, non-compressed data may be stored in the storage unit.

Operation of the monitoring television controlling and recording apparatus 3 is now described in detail.

When the record button 203 on the operation panel 3091 shown in Fig. 4 is depressed, an input image signal from the monitoring television camera 1 is sent through the video interface 305 to the image recognition unit 303, which starts determination as to whether an entering object is present within the photographed image or not. As the method of detecting the entering object at this time, for example, a known method of obtaining a difference between a background image and the currently inputted image to detect the entering object can be used sufficiently. Such a detection method is disclosed in, for example, the above-mentioned U.S. Patent Serial No. 08/646018 or the like. In this manner, when any entering object is detected while the image recognition unit 303 performs the detection processing, the controller 301 records, in the storage unit 306 in response to a signal from the image recognition unit 303, the image data including the entering object together with the date and time of detection of the entering object and information relating to a start point, an intermediate point and an end point of detection of the entering object.

In this manner, such a recording operation is continued automatically. In the embodiment, the image data is adapted to be recorded in the storage unit 306 only when the entering object is detected as described above.

Alternatively, when the memory capacity of the storage unit 306 is sufficiently large, the image data from the camera 1 may be recorded in the storage unit 306 continuously regardless of the detection of the entering object. Alternatively, a sampling rate for record frames of the image data from the camera 1 may be lowered while the entering object is not detected and the sampling rate for the record frames may be increased while the entering object is detected. For example, in the case of the NTSC system, the record frame of the image data from the camera 1 maybe sampled at intervals of k × 33 msec (k is an integer equal to or larger than 2) to record the sampled image data in the storage unit 306 while the entering object is not detected, and the record frame of the image data from the camera 1 may be sampled at intervals of 33 msec to record the image data of the entering object in the storage unit 306 while the entering object is detected. When the image data from the camera 1 is recorded regardless of the detection of the entering object, the "mark" can be recorded in the recorded data automatically so that the mark is superposed thereon when the entering object is detected. Thus, it is convenient when the recorded image is searched for the entering object later. Alternatively, the "mark" may be inputted and recorded manually when the operator depresses the mark set button 211 during recording or reproducing operation.

In the present invention, there is provided the function that the image data from the camera 1 is subjected to image recognition in the image recognition unit 303 to thereby detect a moving speed of an entering object within the photographed picture (image) so that the speed of the electronic shutter of the monitoring television camera 1 is controlled in accordance with the detected moving speed. The function is provided to prevent the recorded image of the entering object from being blurred and difficult to see when the speed of the object to be photographed (entering object) is faster relative to the shutter speed.

Furthermore, in the present invention, there is provided the function that brightness of the detected entering object itself or its neighborhood is detected by the image recognition unit 303 and the diaphragm (not shown) of the monitoring television camera 1 is controlled in accordance with the detected brightness. The function is provided to prevent such a phenomenon that when the object to be photographed (entering object) is dark relative to the diaphragm value, the image of the entering object becomes extremely dark when changing the shutter speed and sometimes black according to circumstances, and when the entering object is light conversely, the image of the entering object becomes pure white when charging the shutter speed.

Such control of the shutter speed and the diaphragm value is very important for exhibiting the function of the monitoring camera.

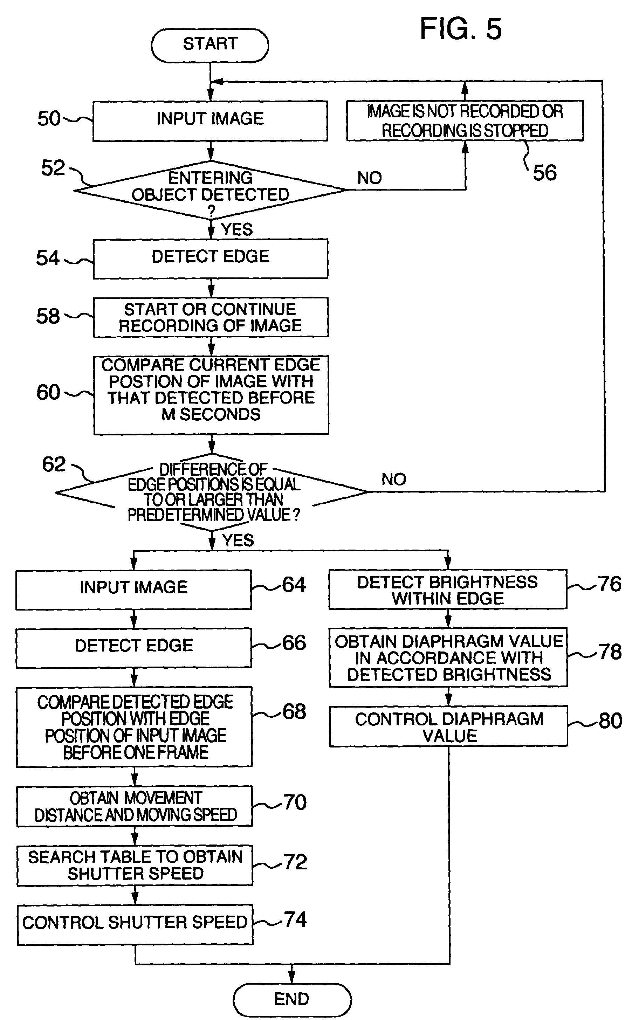

Fig. 5 is a flow chart showing an example of processing operation of the controller 301 for performing such control.

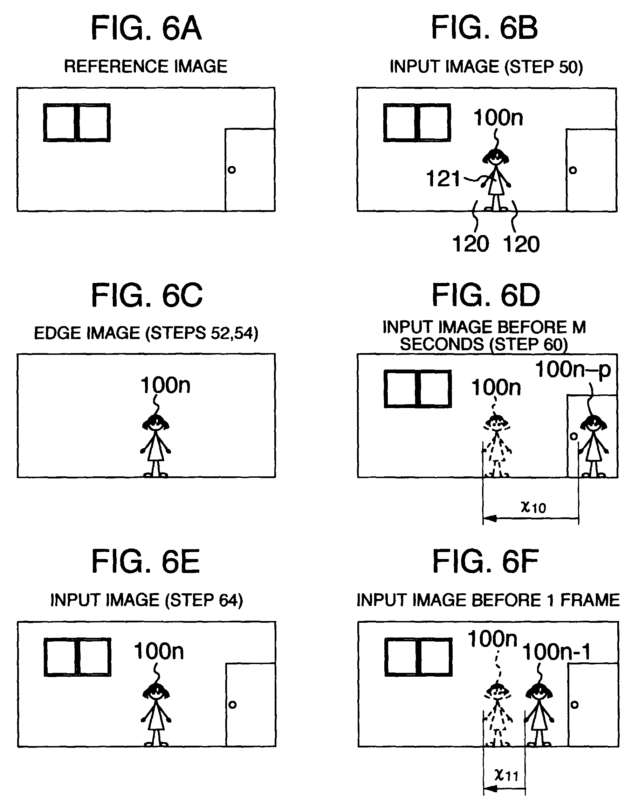

First, when the record button 203 on the operation panel 3091 is depressed, an input image signal for one frame from the monitoring television camera 1 is sent to the image recognition unit 303 through the video interface 305 and the image recognition unit 303 starts detection operation of the entering object within the photographed image (step 50). The detection operation of the entering object is performed as follows. First, a background image in which there is no entering object as shown in Fig. 6A is previously photographed and the photographed background image is stored in advaice in the image recognition unit 303, for example. Then, a difference between the background image (Fig. 6A) and a frame image (Fig. 6B) inputted newly from the television camera 1 is obtained. When an entering object (intruder) 100n comes out in the input frame image as shown in Fig. 6B, an image of only the entering object 100n is obtained as the difference image as shown in Fig. 6C. In this manner, when the entering object is detected by the image recognition unit 303 (step 52), the edge of the entering object image is detected (step 54) and a position of the edge of the entering object of the current frame image is compared with an edge position of the entering object of a frame image generated prior to the current frame image so that a movement amount (moving speed) of the entering object on the picture (photographed image) is obtained (step 60).

In the embodiment, when any entering object is not detected in step 52, the frame image data from which no entering object is detected is not stored in the storage unit 306 and the process is returned to step 50. Further, when the image data has been recorded in the storage unit 306 until now, the recording of the image data is stopped and the process is returned to step 50.

On the other hand, when the entering object is detected in step 52, the edge of the entering object image is detected (step 54). Further, the frame image data from which the entering object is detected and the edge image of the entering object are stored in the storage unit 306, and the process proceeds to step 60. Furthermore, when the image data has been stored in the storage unit 306 until now, the image data and the edge image are continuously stored and the process proceeds to step 60.

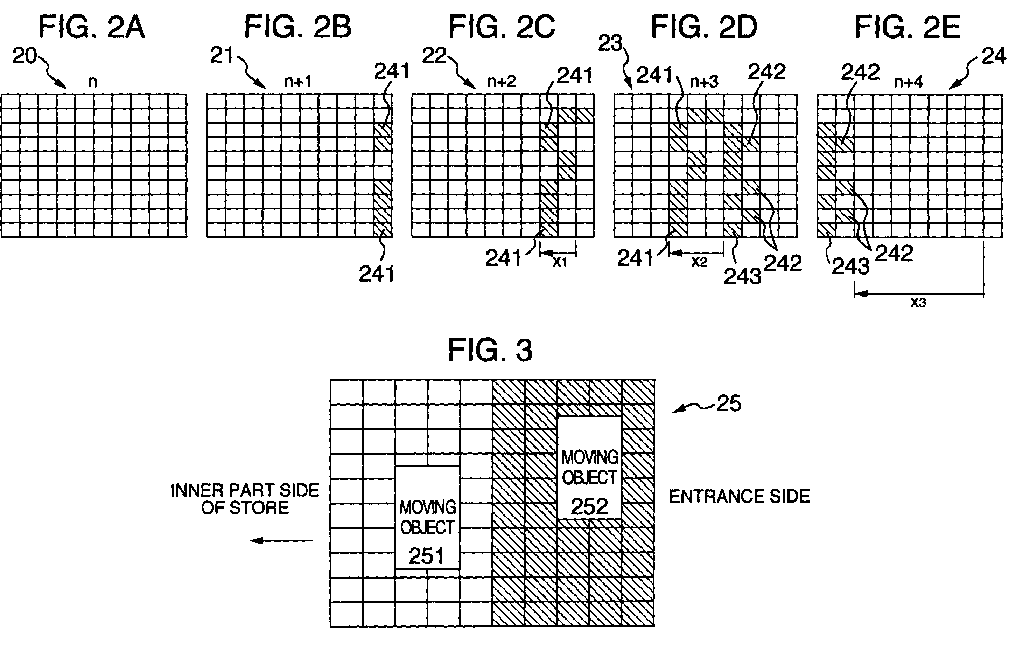

Referring now to Figs. 2A to 2E, an example of the method of comparing edge positions and of obtaining a movement amount (moving speed) of the entering object on the picture is described.

As shown in Figs. 2A to 2E, an input image having, for example, 640 × 480 pixels and inputted from the television camera 1 is divided into a plurality of areas (in this example, 10 × 10 = 100 areas) . That is, in Figs. 2A to 2E, the input image is divided into 10 in each of the horizontal and vertical directions by way of example. Figs. 2A to 2E show edge images 20, 21, 22, 23 and 24 of difference images between input frame images supplied from the television camera 1 and background images at times n, n+1, n+2, n+3 and n+4, respectively. As described above, in the case of the NTSC system, the period of input frames is 33 msec. Any entering object is not detected in the frame image (Fig. 2A) at time n. It is supposed that an entering object comes into the range of the monitoring television camera 1 at time n+1 from right to left direction of the picture in the screen, for example. At this time, the entering object is detected as area blocks shown by hatching in the image 21 as shown in Fig. 2B, for example, and a left end edge 241 is detected. The position of the edge 241 is a starting point of object detection and the time n+1 is a starting time of object detection. Then, when the entering object further moves in the left direction, for example, of the picture in the screen at time n+2, it is detected that the left end edge 241 has moved left as shown in Fig. 2C. Similarly, when the entering object further moves in the left direction of the picture at times n+3 and n+4, it is detected that the left end edge 241 has further moved left as shown in Figs. 2D and 2E. When the entering object has disappeared from the range of the monitoring television camera 1 at next time n+5, edges 241 and 242 in Figs. 2C and 2D are intermediate points of detection and the right end edge 242 of the entering object in Fig. 2E is an end point of object detection. The time n+4 is an end time of object detection.

As described above, when it is assumed that the entering object moved from right to left, for example, in an installed place of the monitoring television camera 1, the moving speed of the entering object on the picture is obtained as a movement distance of the edge within the picture in a unit time. For example, the moving speed at time n+2, for example, is obtained as a difference ×1 of blocks between the detection positions of the edge 241 at time n+2 and the edge 241 at time n+1. Similarly, the moving speed at time n+3 is obtained as a block difference ×2 between the detection positions of the edge 241 at time n+3 and the edge 241 at time n+2. Furthermore, the moving speed at time n+4 is obtained as a block difference ×3 between the detection positions of the edge 242 at time n+4 and the edge 242 at time n+3.

Referring now to Fig. 5 again, in step 60, an edge position (Fig. 6C) of the entering object 100n in the input image in step 50 obtained in step 54 is compared with an edge position of the entering object 100n-p in an input image (Fig. 6D) taken before m seconds (p-th frame, where p is an integer equal to or larger than 2) and recorded in the storage unit 306 to thereby obtain a difference x10 of the edge positions, that is, a movement amount of the entering object. At this time, it is determined whether the movement amount, that is, the difference of the edge positions is smaller than a predetermined value or not and when it is smaller than the predetermined value, the shutter speed and the diaphragm value are not changed and the process is returned to step 50 (step 62). This is because it is not necessary to change the shutter speed and the diaphragm value which are set to the optimum conditions in the normal state since the entering object is hardly moved when the movement amount of the entering object is small. On the other hand, when the difference of the edge positions is larger than or equal to the predetermined value, the process proceeds to processing described in step 64 et seq. (step 62). Further, when any entering object is not detected in the input image supplied before m seconds, the process is returned to step 50.

In the processing described in step 64 et seq., the controller 301 obtains an optimum shutter speed in accordance with the movement amount and supplies a control signal to the monitoring television camera 1 through the communication control unit 304 thereby to set the shutter speed of the television camera 1 to the obtained optimum value. Further, the image recognition unit 303 detects the brightness of the detected entering object itself or its neighborhood and obtains an optimum diaphragm value in accordance with the detected brightness, so that a control signal is supplied to the monitoring television camera 1 through the communication control unit 304 to set the diaphragm value of the television camera 1 to the optimum value.

An example of control of such a shutter speed and diaphragm value is now described with reference to Fig. 5 and the like.

When the moving speed of the entering object on the picture (screen) is fast upon recording of the input image, the image of the entering object is blurred. In this connection, even when an actual speed of the entering object is slow, the moving speed of the entering object on the picture (screen) becomes fast if the entering object is near to the monitoring television camera, whereas even when the actual speed of the entering object is fast, the moving speed of the entering object on the picture becomes slow if the entering object is distant from the monitoring television camera. Accordingly, in the embodiment, the moving speed of the entering object is determined by using the moving speed of the entering object on the picture (screen). To this end, the image recognition technique is employed to obtain the moving speed of the entering object on the picture and set the shutter speed of the monitoring television camera to the optimum value in accordance with the obtained moving speed.

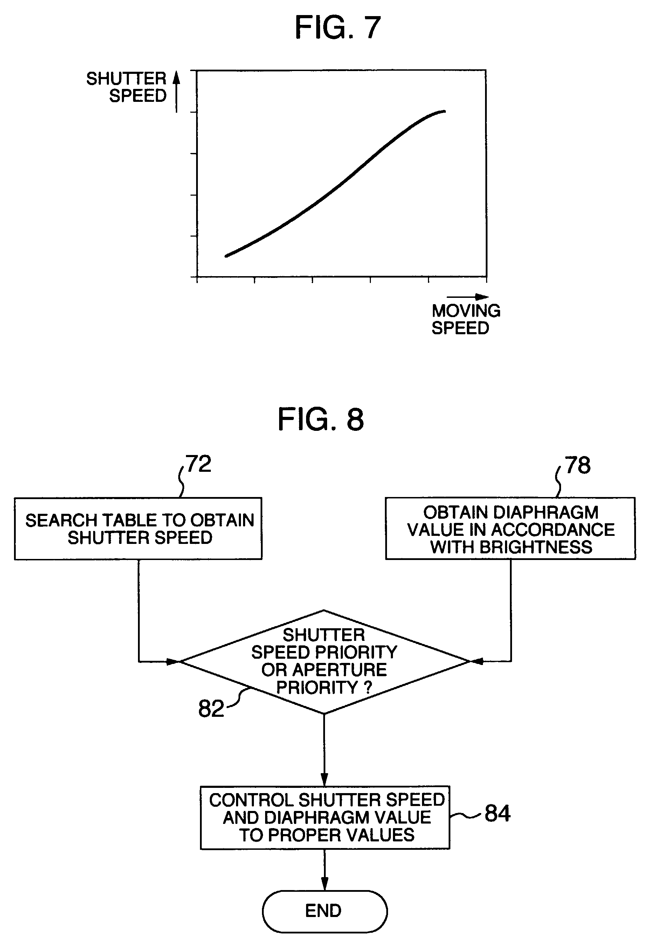

Accordingly, the image recognition unit 303 first reads out the input image (Fig. 6E) obtained in step 50 stored in the storage unit 306 therefrom (step 64) and detects the edge of the entering object 100n in the input image (step 66). Then, the detected edge position is compared with the edge position of the entering object 100n-1 in the input image (Fig. 6F) taken before one frame and stored in the storage unit 306 (step 68) to thereby obtain a difference x11 (Fig. 6F) of the edge positions, that is, the movement amount of the entering object or the moving speed of the entering object on the picture (screen) (step 70). Next, the optimum value of the shutter speed of the monitoring television camera is obtained on the basis of the obtained moving speed of the entering object (step 72). In the method of obtaining the optimum value of the shutter speed on the basis of the moving speed of the entering object on the picture, for example, the relation between the moving speed of the entering object on the picture and the optimum value of the shutter speed may be previously set and a table showing the relation is previously prepared as shown in Fig. 7 (for example, a two-dimensional table), so that the optimum value of the shutter speed is obtained with reference to this table. Such a table may be stored in the memory 302, for example.

When a current shutter speed is different from the optimum value of the shutter speed obtained above, the controller 301 supplies a control signal to the monitoring television camera 1 to instruct the television camera 1 to set the shutter speed of the electronic shutter to the obtained optimum value.

In order to prevent erroneous operation in control in the embodiment, when the number of edge blocks detected in steps 54 and 66 is smaller than or equal to a predetermined number (threshold value) (for example, 2 or 3 blocks or less), the detected edge may be regarded as being wrong and be treated as the edge not to be processed. More particularly, the number of right end blocks 242 of the entering object in Figs. 2D and 2E, for example, is three, which is smaller than or equal to the threshold value. Accordingly, these blocks 242 may not be regarded as the right end edge and blocks 243 on the left side thereof may be regarded as the right end edge. Thus, when the right or left end edge of the entering object may not be detected in step 54 or 66, the process may be returned to step 50 or 64, respectively.

Control of the diaphragm value of the television camera 1 is now described.

Generally, when an entering object is detected by means of the image recognition, the brightness of the whole picture of the photographed image is obtained and the diaphragm value of the television camera 1 is adjusted in accordance with the obtained brightness. This is to prevent such a phenomenon that the image of the entering object becomes dark when the diaphragm is made small for light background image whereas the image of the entering object becomes pure white when the diaphragm is opened or made large for dark background image, so that the entering object is difficult to be detected in both cases. However, in such a conventional method, the brightness of the entering object cannot be controlled exactly and the image of the entering object cannot be identified sufficiently.

On the other hand, as described above, the edge of the image of the entering object is detected and the brightness of the pixels surrounded by the edge (for example, area 121 of Fig. 6B) is obtained so that the diaphragm value of the television camera 1 may be controlled in accordance with the obtained brightness. In the embodiment, such control is performed. That is, when the brightness of the pixels surrounded by the edge is high, the diaphragm is made small and when the brightness is low, the diaphragm is made large.

Accordingly, in step 76 of the flow chart of Fig. 5, the brightness of pixels surrounded by the edge (for example, area 121 of Fig. 6B) obtained in step 54, of the entering object of the input image inputted in step 50 is obtained and the controller 301 obtains an optimum diaphragm value in accordance with the obtained brightness (step 78). Then, the controller 301 supplies a control signal to the monitoring television camera 1 through the communication control unit 304 to thereby set the diaphragm of the television camera 1 to the obtained optimum value (step 80).

In the method of obtaining the optimum value of the diaphragm on the basis of the brightness of the pixels surrounded by the edge of the entering object image, for example, the relation between the brightness of the pixels surrounded by the edge of the entering object and the optimum value of the diaphragm is previously set and a table showing the relation of the brightness and the optimum value of the diaphragm and similar to the table shown Fig. 7 is previously prepared, so that the optimum value of the diaphragm is obtained from the brightness with reference to the table. Such a table may be stored in the memory 302, for example.

Furthermore, when the entering object is detected by means of the image recognition, the brightness of pixels of the neighborhood or the periphery (for example, area 120 and the like of Fig. 6B) of the entering object image may be obtained and the diaphragm value of the television camera 1 may be adjusted in accordance with the obtained brightness. That is, when the brightness of the periphery (neighborhood) of the entering object is higher, the diaphragm is made larger, and when the brightness of the periphery (neighborhood) of the entering object is lower, the diaphragm is made smaller. In this case, since the diaphragm is adjusted in accordance with the brightness of the periphery of the entering object even when the entering object is moved, the brightness of the entering object can be controlled exactly irrespective of change of the brightness of the periphery of the entering object. Further, in this case, the brightness of the periphery in the moving direction of the entering object may be employed as the brightness of the periphery of the entering object to thereby control the diaphragm in accordance with the brightness in the moving direction.

Generally, there is a correlation between the shutter speed and the diaphragm of the monitoring television camera 1. Accordingly, an aperture-priority mode and a shutter-speed-priority mode may be provided to thereby obtain the optimum values of the shutter speed and the diaphragm in accordance with the selected mode.

To this end, a button (not shown) for selecting the aperture-priority mode and the shutter-speed-priority mode, for example, is provided in the operation panel 3091 shown in Fig. 4 and, as shown in the flow chart of Fig. 8, after execution of steps 72 and 78, it is determined which of the aperture-priority mode and the shutter-speed-priority mode is selected (step 82), whereby the shutter speed and the diaphragm are controlled to the optimum values in accordance with the selected mode. In this case, the relation between the moving speed, the brightness, the shutter speed and the diaphragm or aperture may be previously set and a table showing the relation may be previously prepared to thereby obtain the shutter speed and the diaphragm with reference to the table.

Referring now to Fig. 3, control in case where two entering objects 251 and 252 having different moving speeds exist in a photographing range (monitor area) of the monitoring television camera 1 is described. As shown in Fig. 3, for example, the monitoring television camera 1 is to monitor the inside of a store and when the entrance thereof is on the right side of the picture and the inner part thereof is on the left side of the picture, the shutter speed and the diaphragm are controlled in accordance with the moving speed of the moving object 252 existing in the area near to the entrance and the brightness of the moving object 252 itself (or its neighborhood). This is because the moving object 251 has been already detected in the right area in the previous frame and control has been made on the basis of the detection result. Accordingly, it is desirable that the shutter speed is set in accordance with the moving speed of the moving object 252. In this manner, the order of priority is assigned to a plurality of detected objects in accordance with a situation of an installed position of the monitoring television camera 1 and photographing conditions of the television camera are set in accordance with the order of priority.

In the embodiment, a frame rate used to record image data from the camera 1 in the image recording unit 303 may be changed in accordance with the moving speed of the moving object. That is, when the moving speed of the entering object is larger than or equal to a predetermined value, the frame rate for recording is increased, and when the moving speed is smaller than the predetermined value, the frame rate for recording is reduced. Normally, in the monitoring apparatus, in order to record an image for a long time, the recording frame rate is reduced to make recording. For example, the image recording unit 303 may be controlled to increase the recording frame rate only when the moving speed of the moving object is increased.

In the embodiment described above, only one monitoring television camera is used, while a plurality of monitoring television cameras may be used. In this case, an identification code peculiar to each television camera is superposed on an image signal of each camera.

Further, it is needless to say that the present invention can be used as not only the monitoring apparatus but also a television camera having no recording unit.

## Claims

1. A control method of a television camera (1) for monitoring an entering object into a monitor area, comprising the steps of:
(a) detecting an entering object in input images of said monitor area picked up successively by said television camera (1);
(b) detecting a moving speed of said entering object in said input image (step 64-70); and
(c) controlling a shutter speed of said television camera in accordance with said moving speed of said entering object (step 72-74).

2. A control method of a television camera according to Claim 1, wherein
said step (b) comprises substeps of detecting edge of said entering object from the image of said entering object (step 66), obtaining a difference between an edge position of said entering object in a current input image and an edge position of said entering object in an input image taken before (step 68), and obtaining a moving speed in said input image of said entering object in a unit time (step 70).

3. A control method of a television camera according to Claim 1, further comprising the step of:
(d) detecting brightness in the input image of the entering object itself or the neighborhood of the entering object detected in said step (a) and controlling a diaphragm of said television camera in accordance with the detected brightness (step 76-80).

4. A control method of a television camera according to Claim 1, further comprising the step of:
(e) recording the input image in a storage unit (306) while said entering object is detected in said input image (step 58).

5. A control method of a television camera according to Claim 4, further comprising the step of:
(f) shortening a period of recording said input image in a storage unit (306), as compared with the time that any entering object is not detected, while said entering object is detected in said input image.

6. A control method of a television camera (1) for monitoring an entering object into a monitor area, comprising the steps of:
(a) detecting an entering object in input images of said monitor area picked up successively by said television camera (1);
(b) detecting brightness in said input image of said detected entering object itself or neighborhood thereof (step 76); and
(c) controlling a diaphragm of said television camera (1) in accordance with the detected brightness (step 78-80).

7. A control method of a television camera according to Claim 6, wherein
said step (b) comprises substeps of detecting the edge of said entering object from the image of said entering object (step 66), and detecting brightness of the outside or inside of said edge in said input image.

8. A control method of a television camera according to Claim 7, further comprising the step of:
(d) recording said input image in a storage unit (306) while said entering object is detected in said input image (step 58).

9. A control method of a television camera according to Claim 7, further comprising the step of:
(e) shortening a period of recording said input image in a storage unit (306), as compared with the time that any entering object is not detected, while said entering object is detected in said input image.

10. A control apparatus of a television camera (1) for monitoring an entering object into a monitor area, comprising:
an image recognition unit (303) for detecting an entering object in input images of said monitor area picked up successively by said television camera (1) and detecting a moving speed of said entering object in said input image; and
a controller (301) for controlling a shutter speed of said television camera in accordance with said moving speed of said entering object.

11. A control apparatus of a television camera according to Claim 10, wherein
said image recognition unit(303) includes means for detecting said entering object in said input images picked up by said television camera (1), detecting edge of said entering object from the image of said entering object, obtaining a difference between an edge position of said entering object in a current input image and an edge position of the entering object in said input image taken before, and obtaining a moving speed in said input image of said entering object in a unit time.

12. A control apparatus of a television camera according to Claim 10, wherein
said image recognition unit (303) further includes means for detecting brightness in said input image of said entering object itself or the neighborhood thereof, and said controller (301) further includes means for controlling a diaphragm of said television camera (1) in accordance with the detected brightness.

13. A control apparatus of a television camera according to Claim 10, wherein
said controller (301) includes means for recording said input image in a storage unit (306) while said entering object is detected in said input image.

14. A control apparatus of a television camera according to Claim 10, wherein
said controller (301) further includes means for shortening a period of recording said input image in a storage unit, as compared with the time that any entering object is not detected, while said entering object is detected in said input image.

15. A control apparatus of a television camera (1) for monitoring an entering object into a monitor area, comprising:
an image recognition unit (303) for detecting an entering object in input images of said monitor area picked up successively by said television camera (1) and detecting brightness in said input image of said entering object itself or the neighborhood thereof; and
a control unit (301) for controlling a diaphragm of said television camera (1) in accordance with the detected brightness.

16. A control apparatus of a television camera according to Claim 15, wherein
said image recognition unit (303) includes means for detecting said entering object in input images picked up by said television camera (1), detecting edge of said entering object from the image of the entering object, and detecting brightness of the outside or inside of said edge in said input image.

17. An image monitoring and recording apparatus for monitoring and recording an entering object into a monitor area, comprising:
a video interface (305) for taking in an image signal of daid monitor area picked up by a television camera (1) and outputting said image signal for displaying to a monitoring display unit (2);
an image recognition unit (303) for detecting said entering object from said image signal from said video interface, detecting edge of the image from the image of said entering object, obtaining a moving speed of said entering object in a unit time, and obtaining a shutter speed of said television camera in accordance with said moving speed of the entering object;
a communication control unit (304) for transmitting to said television camera a control signal to be supplied to said television camera, said control signal controlling said shutter speed;
a storage unit (306) for recording said image signal supplied from said video interface (305); and
a controller (301) for controlling said storage unit, said communication control unit, said image recognition unit and said video interface and for transmitting said control signal for said shutter speed to said television camera (1) through said communication control unit (304).

18. An image monitoring and recording apparatus according to Claim 17, wherein
said image recognition unit (303) further includes means for detecting brightness in said input image of the detected entering object itself or the neighborhood thereof and obtaining a diaphragm of said television camera in accordance with the detected brightness, and said controller (301) includes means for transmitting a control signal for the diaphragm obtained in said image recognition unit (303) to said television camera through said communication control unit (304).
